# EUROPEAN PATENT APPLICATION

(11) **EP 4 564 512 A1**
(43) Date of publication of application: **04.06.2025**
(21) Application number: 23845175.1
(22) Date of filing: 27.06.2023
(51) Int. Cl.: H01M 10/0567, H01M 10/0566, H01M 10/0564, H01M 10/0525

(54) **NON-AQUEOUS ELECTROLYTE SOLUTION AND LITHIUM ION BATTERY**

(30) Priority: 28.07.2022 CN 202210896554
(71) Applicant: Zhangjiagang Guotai-Huarong New Chemical Materials Co., Ltd, Suzhou, Jiangsu 215600 (CN)
(72) Inventor: QIN, Hu, Suzhou, Jiangsu 215600 (CN); ZHOU, Ke, Suzhou, Jiangsu 215600 (CN); ZHANG, Yin, Suzhou, Jiangsu 215600 (CN); CHEN, Xiaoqin, Suzhou, Jiangsu 215600 (CN); GAN, Chaolun, Suzhou, Jiangsu 215600 (CN)
(74) Representative: De Vries & Metman
(86) International application number: PCT/CN2023/102724
(87) International publication number: WO 2024/021962

(57) **Abstract**

The present invention relates to a non-aqueous electrolyte and a lithium-ion battery. The non-aqueous electrolyte according to the present invention includes a lithium salt, an organic solvant and additives. The percentage by weight of the additives in the non-aqueous electrolyte is 0001% to 10%, the additives include 1,3,6-hexanetricarbonitrile and vinylene carbonate, and the weight ratio of 1,3,6-hexanetricarbonitrile to vinylene carbonate is 1 : 4 to 19. Under the synergistic effect of 1,3,6-hexanetricarbonitrile and vinylene carbonate, the lithium-ion battery prepared with the non-aqueous electrolyte has better cycle performance and heat resistance.

## Description

### TECHNICAL FIELD

The present invention relates to a non-aqueous electrolyte and a lithium-ion battery.

### BACKGROUND

In recent years, the rapid development of battery technology has provided more development opportunities for the broad market, but also brings greater challenges. With the continuous expansion and deepening of the application field of battery technology, the requirement for the environmental adaptability of battery use is higher. Therefore, batteries need to maintain good electrical properties in different harsh environments, and a wider temperature range has become an important topic for the development of batteries. In order to solve this problem, people need to make a breakthrough in the research and development of battery materials.

With high energy density, high output power, low environmental pollution and other advantages, lithium-ion secondary batteries have been widely applied in electric vehicles and consumer electronic products. In order to further increase the energy density of a lithium-ion battery, on the one hand, it is necessary to increase the capacities-per-gram of cathode and anode materials, and on the other hand, it is necessary to increase the compacted density of an anode film. However, after the compacted density of the anode film is increased, the cycle life of the lithium-ion battery will be shortened. Therefore, it is necessary to improve the performance of the lithium-ion battery while increasing the compacted density of the anode film.

### SUMMARY OF THE INVENTION

The first objective of the present invention is to provide a non-aqueous electrolyte, and the second objective of the present invention is to provide a lithium-ion battery, so as to improve the performance of lithium-ion batteries and effectively increase the cycle performance and heat resistance of lithium-ion batteries.

In order to solve the aforementioned technical problems, the present invention adopts the following technical solution:
A first aspect of the present invention provides a non-aqueous electrolyte, which includes a lithium salt, an organic solvent and additives, where the additives include 1,3,6-hexanetricarbonitrile and vinylene carbonate.

The percentage by weight of the additives in the non-aqueous electrolyte is 0.001% to 10%, and the weight ratio of 1,3,6-hexanetricarbonitrile to vinylene carbonate is 1 : 4 to 19.

The compounding, added amount and proportion of the above additives can effectively increase the cycle performance and heat resistance of a prepared lithium-ion battery.

Preferably, the percentage by weight of the additives in the non-aqueous electrolyte is 1% to 5%.

Further preferably, the percentage by weight of the additives in the non-aqueous electrolyte is 2% to 3.5%.

Preferably, the additives are 1,3,6-hexanetricarbonitrile and vinylene carbonate, and when only these two additives are used, the cycle performance and heat resistance of the lithium-ion battery with the non-aqueous electrolyte are better.

Preferably, the organic solvent includes cyclic carbonate and chain carbonates, where the percentage by weight of cyclic carbonate in the organic solvent is 30% to 50%. Chain carbonates include symmetric chain carbonate and asymmetric chain carbonate, where the weight ratio of symmetric chain carbonate to asymmetric chain carbonate is 1 : 2 to 6.

The compounding and proportion of the organic solvent can effectively increase the cycle performance and heat resistance of the prepared lithium-ion battery. Moreover, the organic solvent can produce a synergistic effect along with the additives, so that the cycle performance and heat resistance of the lithium-ion battery can be further increased.

Further preferably, cyclic carbonate includes one or more of ethylene carbonate and propylene carbonate.

More further preferably, cyclic carbonate is ethylene carbonate.

Further preferably, symmetric chain carbonate includes one or more of dimethyl carbonate and diethyl carbonate, and asymmetric chain carbonate includes methyl ethyl carbonate.

Under the effect of the compounding and proportion of cyclic carbonate and chain carbonates mentioned above, the lithium-ion battery can have better cycle performance and heat resistance.

Preferably, the percentage by weight of the lithium salt in the non-aqueous electrolyte is 5% to 20%.

Further preferably, the percentage by weight of the lithium salt in the non-aqueous electrolyte is 10% to 15%.

More further preferably, the percentage by weight of the lithium salt in the non-aqueous electrolyte is 12% to 14%.

Preferably, the lithium salt includes a phosphorus-containing compound and a boron-containing compound.

The phosphorus-containing compound includes one or more of lithium hexafluorophosphate, lithium bisoxalatodifluorophosphate, lithium difluorophosphate and lithium tetrafluoro(oxalato)phosphate.

The boron-containing compound includes one or more of lithium tetrafluoroborate, lithium bis(oxalate)borate and lithium difluoro(oxalato)borate.

Preferably, the lithium salt includes lithium difluoro(oxalato)borate and lithium hexafluorophosphate, where the weight ratio of lithium difluoro(oxalato)borate to lithium hexafluorophosphate is 1 : 18 to 29.

The lithium salt, the organic solvent and the additives can produce a synergistic effect, so the prepared lithium-ion battery has the best cycle performance and heat resistance.

A second aspect of the present invention provides a lithium-ion battery, which includes a positive plate, a negative plate, a separator and the non-aqueous electrolyte.

The positive plate includes a layered transition metal oxide, an olivine type phosphate compound and a spinel type manganese-containing compound.

Preferably, an active substance in the positive plate includes lithium iron phosphate.

Preferably, an active substance in the negative plate includes graphite, and the compacted density of the negative plate is 1.45 to 1.60 g/cm³.

Compared with the prior art, the present invention has the following advantages:
The non-aqueous electrolyte and the lithium-ion battery provided by the invention have better cycle performance and heat resistance, and prepared power batteries can meet increasingly higher requirements for lithium-ion batteries in the fields of new energy vehicles, etc. Therefore, the non-aqueous electrolyte and the lithium-ion battery provided by the present invention have a good market prospect and economic benefits.

### DETAILED DESCRIPTION

When the compacted density of an anode film is increased to increase the energy density of a lithium-ion battery, the cycle life of the lithium-ion battery is decreased. In order to increase the performance of lithium-ion batteries, the inventor of the present invention repeatedly conducted an in-depth research and found that the cycle performance and heat resistance of lithium-ion batteries prepared by using the following non-aqueous electrolyte can be effectively increased, thus achieving the present invention.

It was found in the research that due to the increase in the compacted density of an anode film, the wettability between plates and an electrolyte became worse, and lithium ions were difficult to diffuse, leading to the shortening of the cycle life of a lithium-ion battery. Therefore, the present invention improves the formula of electrolyte, and a non-aqueous electrolyte provided by the invention includes a compound capable of generating lithium-ion solvation and additives for forming protective films on the surfaces of a cathode and an anode. When the compacted density of an anode film is increased, the non-aqueous electrolyte provided by the present invention can have better wettability with plates, which is beneficial to the diffusion of lithium ions, thus increasing the cycle life and high temperature resistance of a lithium-ion battery. The electrolyte provided by the present invention also includes a lithium salt and an organic solvent.

The additives include 1,3,6-hexanetricarbonitrile (HTCN) and vinylene carbonate (VC), and the percentage by weight of the additives in the non-aqueous electrolyte is 2% to 3.5%. Moreover, the weight ratio of 1,3,6-hexanetricarbonitrile to vinylene carbonate is 1 : 4 to 19.

The organic solvent includes cyclic carbonate and chain carbonates, where the percentage by weight of cyclic carbonate in the organic solvent is 30% to 50%. Chain carbonates include symmetric chain carbonate and asymmetric chain carbonate, where the weight ratio of symmetric chain carbonate to asymmetric chain carbonate is 1 : 2 to 6.

The lithium salt includes one or more of lithium hexafluorophosphate, lithium bisoxalatodifluorophosphate, lithium difluorophosphate, lithium tetrafluoro(oxalato)phosphate, lithium tetrafluoroborate, lithium bis(oxalate)borate and lithium difluoro(oxalato)borate.

A lithium-ion battery provided by the present invention includes the non-aqueous electrolyte, a cathode and an anode, where the cathode and the anode can occlude or release metal ions. Moreover, the anode includes graphite particles and metal particles as anode active substances, where the metal particles can form an alloy with Li. Under the synergistic effect of the additives, the organic solvent and the lithium salt mentioned above, the electrolyte has better wettability with the plates, increasing the diffusivity of lithium ions, so the lithium-ion battery has better cycle performance and high temperature resistance.

The present invention will be further described with reference to examples. However, the present invention is not limited to the following examples. The implementation conditions adopted in the examples may be further adjusted according to the different requirements of specific use, and the unspecified implementation conditions are the conventional conditions in the art. Technical features involved in various embodiments of the present invention may be combined with one another, as long as they do not conflict with one another.

In specific examples of the present invention, all the materials used are commercially available. In the specific examples of the invention, a lithium iron phosphate battery was taken as an example. The lithium iron phosphate battery has the characteristics of long cycle life, good safety, low price, etc. Therefore, lithium iron phosphate is one of the most commonly used cathode materials for power batteries at present.

### Preparation of Non-aqueous Electrolyte

In a glove box filled with argon (H₂O content < 10 ppm), one or two of dimethyl carbonate (DMC) and diethyl carbonate (DEC), ethylene carbonate (EC) and methyl ethyl carbonate (EMC) were uniformly mixed according to different weight ratios, and certain proportions of lithium difluoro(oxalato)borate (LiODFB) and lithium hexafluorophosphate (LiPF₆) and different contents of various additives were added into mixed solutions, so that electrolytes in comparative examples and examples were prepared.

### Preparation of Lithium-ion Batteries

Cathode: 95 wt% of lithium iron phosphate as an active substance, 3 wt% of acetylene black as a conductive material and 2 wt% of polyvinylidene fluoride (PVDF) as a binding material were mixed in N-methylpyrrolidone solvent using a dispersing mixer to prepare slurry. The slurry was evenly coated on both sides of an aluminum foil and dried, and pressing was then performed to make a cathode with a compacted density of 2.3 g/cm³.

Anode: 95 wt% of artificial graphite as an active substance, 2 wt% of conductive carbon black (SP) as a conductive material and 3 wt% of sodium carboxymethylcellulose (CMC) as a binding material were mixed using the dispersing mixer to prepare slurry. The slurry was evenly coated on both sides of an copper foil and dried, and pressing was then performed to make an anode with a compacted density of 1.6 g/cm³.

The cathode, the anode and a polyolefin separator were laminated according to the order of the cathode, the separator and the anode and wrapped with an aluminum film, thus obtaining a battery element, and vacuum sealing was performed after an electrolyte was injected, so that a non-aqueous electrolyte lithium-ion battery was prepared.

### Evaluation of Non-aqueous Electrolyte Secondary Batteries

Normal-temperature test of batteries: the cathode adopted lithium iron phosphate, and each assembled battery was formed first under the following formation conditions: the battery was charged at a constant current of 0.1 C until 3.7 V and finally charged at a constant voltage of 3.7 V for 2 h, stood for 10 min, and was then discharged at a constant current of 0.2 C until 2.75 V. Under a normal temperature of 25°C, each battery was charged at a constant current of 1 C until 3.75 V and then charged at a constant voltage of 3.75 V for 2 h, stood for 10 min, and was then discharged at a constant current of 1 C until 2.75 V, the discharge capacity in the first week was recorded as W₁, and the battery stood for 10 min. The number of cycles was set as 2000 weeks, and the discharge capacity in the 2000th week was recorded as W₂₀₀₀. Capacity retention rate in the 2000th week = W₂₀₀₀ / W₁ × 100%.

High-temperature test of batteries: each assembled battery was formed first under the following formation conditions: the battery was charged at a constant current of 0.1 C until 3.75 V and finally charged at a constant voltage of 3.75 V for 2 h, stood for 10 min, and was then discharged at a constant current of 0.2 C until 2.75 V. The test conditions of high-temperature cycle performance of the lithium-ion batteries were as follows: under a high temperature of 45°C, each battery was charged to 3.75 V at a constant current of 1 C and then charged at a constant voltage of 3.75 V for 2 h, stood for 10 min, and was discharged at a constant current of 1 C until 2.75 V, the discharge capacity in the first week was recorded as W₁, and the battery stood for 10 min; the number of cycles was set as 1000 weeks, and the discharge capacity in the 1000th week was recorded as W₁₀₀₀. Capacity retention rate in the 1000th week = W₁₀₀₀ / W₁ × 100%.

In each of the examples and comparative examples, the formulas of the non-aqueous electrolytes, the capacity retention rates (%) under 25°C in the 2000th week and the capacity retention rates (%) under 45°C in the 1000th week are shown in Table 1.

**Table 1**

| | Organic Solvent | Lithium Salt | Additive | Capacity Retention Rate under 25 °C in the 2000th Week | Capacity Retention Rate under 45 °C in the 1000th Week |
|---|---|---|---|---|---|
| Example 1 | DMC/EC/EMC =10/50/40 | 0.5%LiODFB +12%LiPF₆ | 0.5%HTCN +2.5%VC | 89.34% | 85.25% |
| Example 2 | DMC/EC/EMC = 10/50/40 | 0.5%LiODFB +12%LiPF₆ | 0.5%HTCN +3%VC | 90.12% | 88.56% |
| Example 3 | DEC/EC/EMC =10/30/60 | 0.5%LiODFB +12%LiPF₆ | 0.1%HTCN +1.9%VC | 87.64% | 83.82% |
| Example 4 | DEC/EC/EMC =10/30/60 | 0.5%LiODFB +12%LiPF₆ | 0.5%HTCN +2.5%VC | 90.14% | 83.61% |
| Example 5 | DEC/EC/EMC =10/30/60 | 0.5%LiODFB +12%LiPF₆ | 0.5%HTCN +3%VC | 89.28% | 85.47% |
| Example 6 | DEC/EC/EMC =20/40/40 | 0.5%LiODFB +12%LiPF₆ | 0.5%HTCN +2%VC | 88.55% | 86.65% |
| Example 7 | DEC/EC/EMC =20/40/40 | 0.5%LiODFB +12%LiPF₆ | 0.5%HTCN +2.5%VC | 90.88% | 88.98% |
| Comparative Example 1 | DMC/EC/EMC =10/30/60 | 0.5%LiODFB +9.5%LiPF₆ | 2%VC | 78.66% | 75.33% |
| Comparative Example 2 | DMC/EC/EMC =10/30/60 | 0.5%LiODFB +12%LiPF₆ | 2%VC | 80.66% | 80.31% |
| Comparative Example 3 | DMC/EC/EMC =10/50/40 | 0.5%LiODFB +12%LiPF₆ | 0.5%HTCN | 35.62% | 32.56% |
| Comparative Example 4 | EC/EMC=30/7 0 | 12%LiPF₆ | | 51.20% | 45.12% |
| Comparative Example 5 | EC/EMC=30/7 0 | 12%LiPF₆ | 2%VC | 67.82% | 75.32% |
| Comparative Example 6 | EC/EMC=30/7 0 | 0.5%LiODFB +12%LiPF₆ | | 48.21% | 52.36% |
| Comparative Example 7 | EC/EMC=30/7 0 | 12%LiPF₆ | 0.5%HTCN | 45.26% | 45.25% |
| Comparative Example 8 | DMC/EC/EMC =10/50/40 | 0.5%LiODFB +12%LiPF₆ | 0.5%HTCN +1.5%VC | 80.12% | 78.89% |
| Comparative Example 9 | DMC/EC/EMC =10/50/40 | 0.5%LiODFB +12%LiPF₆ | 0.5%HTCN +10%VC | 60.15% | 55.53% |

It can be seen from each example and Comparative Examples 1 to 3 that the compounding of HTCN and VC adopted as the additives in the electrolytes of the present invention can effectively increase the cycle performance and heat resistance of the lithium-ion batteries. Referring to Comparative Examples 8 and 9, it can be seen that the weight ratio of the additives HTCN and VC will also affect the cycle performance and heat resistance of the lithium-ion batteries. The performance data in each example indicate that the cycle performance and heat resistance of the lithium-ion battery can be further increased by adjusting the ratio of HTCN to VC.

Moreover, referring to each example and Comparative Examples 4 to 7, it can be seen that the formula of the organic solvent and the lithium salt adopted by the present invention can produce a synergistic effect with the additives, so that the cycle performance and heat resistance of the lithium-ion battery can be further increased. When the percentage by weight of the lithium salt in the electrolyte is 12.5%, the prepared lithium-ion battery has the best cycle performance and heat resistance.

The aforementioned embodiments are merely intended to describe the technical concept and characteristics of the present invention. Their purpose is to enable those familiar with this technique to comprehend and implement the content of the present invention, without limiting the protection scope of the present invention. All equivalent changes or modifications made according to the spirit and essence of the present invention shall fall within the protection scope of the present invention.

## Claims

1. A non-aqueous electrolyte, **characterized in that**, the non-aqueous electrolyte comprises a lithium salt, an organic solvent and additives, wherein the additives comprise 1,3,6-hexanetricarbonitrile and vinylene carbonate;
the percentage by weight of the additives in the non-aqueous electrolyte is 0.001% to 10%; and
the weight ratio of 1,3,6-hexanetricarbonitrile to vinylene carbonate is 1 : 4 to 19.

2. The non-aqueous electrolyte according to claim 1, **characterized in that**, the percentage by weight of the additives in the non-aqueous electrolyte is 1% to 5%.

3. The non-aqueous electrolyte according to claim 2, **characterized in that**, the percentage by weight of the additives in the non-aqueous electrolyte is 2% to 3.5%.

4. The non-aqueous electrolyte according to claim 1, **characterized in that**, the organic solvent comprises cyclic carbonate and chain carbonates, wherein the percentage by weight of the cyclic carbonate in the organic solvent is 30% to 50%; and
the chain carbonates comprise symmetric chain carbonate and asymmetric chain carbonate, wherein the weight ratio of the symmetric chain carbonate to the asymmetric chain carbonate is 1 : 2 to 6.

5. The non-aqueous electrolyte according to claim 4, **characterized in that**, the cyclic carbonate comprises one or more of ethylene carbonate and propylene carbonate.

6. The non-aqueous electrolyte according to claim 4, **characterized in that**, the symmetric chain carbonate comprises one or more of dimethyl carbonate and diethyl carbonate, and the asymmetric chain carbonate comprises methyl ethyl carbonate.

7. The non-aqueous electrolyte according to claim 1, **characterized in that**, the percentage by weight of the lithium salt in the non-aqueous electrolyte is 5% to 20%.

8. The non-aqueous electrolyte according to claim 7, **characterized in that**, the percentage by weight of the lithium salt in the non-aqueous electrolyte is 10% to 15%.

9. The non-aqueous electrolyte according to claim 8, **characterized in that**, the percentage by weight of the lithium salt in the non-aqueous electrolyte is 12% to 14%.

10. The non-aqueous electrolyte according to claim 1, **characterized in that**, the lithium salt comprises a phosphorus-containing compound and a boron-containing compound; wherein
the phosphorus-containing compound comprises one or more of lithium hexafluorophosphate, lithium bisoxalatodifluorophosphate, lithium difluorophosphate and lithium tetrafluoro(oxalato)phosphate; and
the boron-containing compound comprises one or more of lithium tetrafluoroborate, lithium bis(oxalate)borate and lithium difluoro(oxalato)borate.

11. The non-aqueous electrolyte according to claim 10, **characterized in that**, the weight ratio of the boron-containing compound to the phosphorus-containing compound is 1 : 18 to 29.

12. The non-aqueous electrolyte according to claim 1, **characterized in that**, the lithium salt comprises lithium difluoro(oxalato)borate and lithium hexafluorophosphate, wherein the weight ratio of lithium difluoro(oxalato)borate to lithium hexafluorophosphate is 1 : 18 to 29.

13. A lithium-ion battery, **characterized in that**, the lithium-ion battery comprises a positive plate, a negative plate, a separator and the non-aqueous electrolyte according to any of claims 1 to 12.

14. The lithium-ion battery according to 13, **characterized in that**, an active substance in the positive plate comprises lithium iron phosphate.

15. The lithium-ion battery according to 13, **characterized in that**, an active substance in the negative plate comprises graphite, and the compacted density of the negative plate is 1.45 to 1.60 g/cm³.
